# EUROPEAN PATENT SPECIFICATION

(11) **EP 4 430 799 B1**
(45) Date of publication and mention of the grant of the patent: **12.03.2025**
(21) Application number: 21810597.1
(22) Date of filing: 11.11.2021
(51) Int. Cl.: H04L 9/32, H04L 9/00, G06F 21/64, G06Q 20/10, G06Q 20/36

(54) **ESTABLISHING COMMUNICATIONS CHANNELS**
HERSTELLUNG VON KOMMUNIKATIONSKANÄLEN
ÉTABLISSEMENT DE CANAUX DE COMMUNICATION

(43) Date of publication of application: 18.09.2024
(73) Proprietor: Gronewold Holding GmbH, 26127 Oldenburg (DE); Mike Lohmann - Kreditverwaltung UG (Haftungsbeschränkt), 23858 Reinfeld (DE); LG Memorabilia Ltd, London EC1V 2NX (GB)
(72) Inventor: RICHMOND, Leo Grayson, London EC1V 2NX (GB); KAMMER, Frederik, 26131 Oldenburg (DE); GRONEWOLD, Sebastian, 26135 Oldenburg (DE)
(74) Representative: Haseltine Lake Kempner LLP
(86) International application number: PCT/EP2021/081359
(87) International publication number: WO 2023/083449

(56) References cited:
- US-A1- 2021 248 214
- US-A1- 2021 271 508
- MA CHAO ET AL: "Research on Collaborative Security Based on On-blockchain and Off-blockchain in the Scenario of Power Data Acquisition", 2021 IEEE 21ST INTERNATIONAL CONFERENCE ON COMMUNICATION TECHNOLOGY (ICCT), IEEE, 13 October 2021 (2021-10-13), pages 876 - 881, XP033995578, DOI: 10.1109/ICCT52962.2021.9658051

## Description

### BACKGROUND

Tokens referred to as non-fungible tokens (NFTs) may be used to represent ownership of assets including digital assets such as artwork and tangible assets such as objects in the real world. Blockchain technology may be used to enforce the ownership of such assets and provide confidence in terms of who owns which NFT.

### SUMMARY

Aspects or embodiments may relate to establishing and/or using a communications channel in order to facilitate communications between verified owner(s) of assets based a blockchain.

A first aspect of the invention is a method defined by independent claim 1. Embodiments relating to the first aspect and other related aspects are defined by dependent claims 2 to 20. A second aspect of the invention is a machine-readable medium defined by independent claim 21. A third aspect of the invention is an apparatus defined by independent claim 22. A fourth aspect of the invention is a method defined by independent claim 23. Embodiments relating to the fourth aspect and other related aspects are defined by dependent claims 24 to 25. A fifth aspect of the invention is a machine-readable medium defined by independent claim 26. A sixth aspect of the invention is an apparatus defined by independent claim 27. A seventh aspect of the invention is a method defined by independent claim 28. An embodiment relating to the seventh aspect and other related aspects is defined by dependent claim 29. An eighth aspect of the invention is a machine-readable medium defined by independent claim 30. A ninth aspect of the invention is an apparatus defined by independent claim 31.

### BRIEF DESCRIPTION OF DRAWINGS

Non-limiting examples will now be described with reference to the accompanying drawings, in which:
Figure 1 is a simplified schematic drawing of a computing network in which various embodiments are implemented;
Figure 2 is a simplified schematic drawing of part of a blockchain for facilitating the functionality of various embodiments;
Figure 3 is a flowchart of a method for facilitating communications in a computing network according to an embodiment;
Figure 4 is a simplified schematic drawing of part of a computing network in which various embodiments are implemented;
Figure 5 is a flowchart of a method relating to use of a communications channel according to an embodiment;
Figure 6 is a flowchart of a method relating to messaging using a communications channel according to an embodiment;
Figure 7 is a flowchart of a method relating to use of a blockchain according to an embodiment;
Figure 8 schematically illustrates a machine-readable medium for implementing various embodiments described herein;
Figure 9 is a simplified schematic drawing of an apparatus for implementing various embodiments described herein;
Figure 10 is a flowchart of a method for facilitating communications in a computing network according to an embodiment;
Figure 11 is a flowchart of a method relating to use of a communications channel according to an embodiment;
Figure 12 schematically illustrates a machine-readable medium for implementing various embodiments described herein;
Figure 13 is a simplified schematic drawing of an apparatus for implementing various embodiments described herein;
Figure 14 is a flowchart of a method for facilitating communications in a computing network according to an embodiment;
Figure 15 is a flowchart of a method relating to use of a communications channel according to an embodiment;
Figure 16 schematically illustrates a machine-readable medium for implementing various embodiments described herein; and
Figure 17 is a simplified schematic drawing of an apparatus for implementing various embodiments described herein.

### DETAILED DESCRIPTION

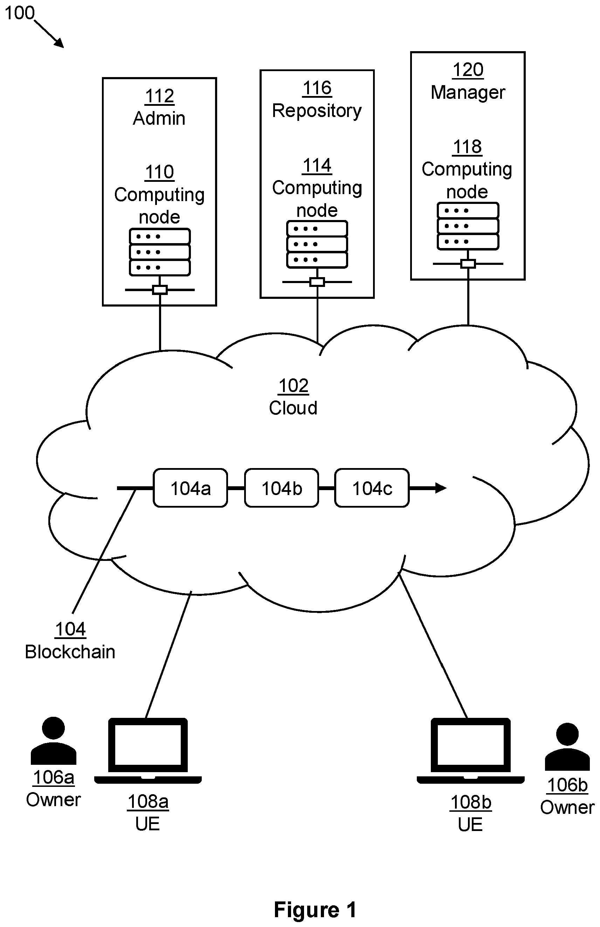

Figure 1 is a simplified schematic drawing of a computing network 100 in which various embodiments described herein may be implemented.

In this implementation, the computing network 100 comprises a cloud 102. The cloud 102 may be implemented in various ways and may comprise any of the entities depicted in Figure 1. However, other implementations are possible and Figure 1 is merely given as one possible implementation for implementing various embodiments described herein.

In some cases, the cloud 102 may comprise or be communicatively coupled to a plurality of nodes, which may be software and/or hardware implemented (e.g., using virtual machines, physical machines, etc.). The plurality of nodes may be used to implement the functionality of various features described herein.

In some cases, the computing network 100 may have a different architecture such as based on at least one server (not shown) controlled by at least one entity such as a service provider, admin, manager, etc.

In some case, the computing network 100 may have a different architecture such as a centralized set-up in which a computing device such as a server (e.g., controlled by one entity) manages various functions of the various entities described herein.

In some cases, the computing network may have a different architecture such as a de-centralized set-up in which multiple computing nodes may be communicatively coupled in a distributed/de-centralized arrangement. This could be part of a peer-to-peer (P2P) network.

Various parts of these potential implementations and other infrastructure possibilities may be combined in order to provide the functionality as described herein.

The computing network 100 stores a blockchain 104 in the cloud 102 (which may include multiple computing nodes as already mentioned). Although in other implementations, the blockchain 104 may be stored in a different way such as in a centralized set-up. In some cases, any of the computing nodes may implement a blockchain client for interacting with any blockchain platform(s) implemented by the computing network 100.

The blockchain 104 comprises a plurality of records 104a, 104b, 104c (three are depicted but there may be fewer or many more records). To avoid confusion with later use of the term "block", the term "record" is used herein to represent the term "block" that may be otherwise associated with blockchain technology. The records in the blockchain 104 may represent various information such as transactions that have occurred. The blockchain 104 may implement a smart contract in order to enforce such transactions. Such a smart contract may be deployed by an entity that sets-up the blockchain 104. In some cases there may be a plurality of blockchains 104 (e.g., for serving different purposes in addition to registering transactions such as storing data, providing links to information and/or identifying various information). The blockchain 104 may be public or private. In some cases, trusted entities (e.g., implementing blockchain clients (not shown) for accessing the blockchain 104) may be permitted to have certain access rights to a private blockchain 104 (such as for performing read, write, consensus operations, etc.).

In use of the blockchain 104, any new transactions may be verified/approved/rejected by a computing node with access to the blockchain 104 using any appropriate protocol such as by consensus.

As noted above, blockchain 104 records (104a, 104b, 104c) may be used to represent ownership (or changes of ownership) of certain assets such as digital assets such as artwork and tangible assets such as objects in the real world. NFTs are examples of tokens which can be recorded on the blockchain 104 to indicate such ownership/change of ownership. These are discussed in more detail below.

As shown in Figure 1, there are two owners 106a, 106b depicted (i.e., "first" and "second" owners 106a, 106b, respectively) although there may be one owner or many more owners that may interact with the computing network 100. Each owner 106a, 106b is associated with a User Equipment (UE) 108a, 108b, respectively. A UE 108a, 108b may be any device (such as a personal computer, laptop, smart phone, smart wearable such as a watch, tablet, Internet of Things (IoT) device, etc.) that an owner 106a, 106b can use to access the computing network 100. For example, the UE 108a, 108b may provide access to a "digital wallet" (or other mechanism) hosted by a platform such as a service provider for managing payments, accessing digital marketplaces and/or registering/checking ownership of assets. Examples of such assets include digital (cryptographic) coins, NFTs, etc. Access to the digital wallet may be provided in various ways in order to ensure that the owner 106a, 106b can interact securely with the platform. For example, a passcode may need to be entered by the owner 106a, 106b and/or 2/multi-factor authentication (e.g., via a message code signaled to a device in the owner's possession, through use an authentication "app", a smart card, etc.) may be implemented in various ways in order to prove the identity of the owner.

As used herein, the term "first computing device" may refer to any computing node within the computing network 100 that is associated with the first owner 106a. The term "second computing device" may refer to any computing node within the computing network 100 that is associated with the second owner 106b. In the implementation of Figure 1, the first computing device corresponds to the first UE 108a and the second computing device corresponds to the second UE 108b. However, there may be implementations where the functionality of the first and/or second computing devices may be implemented by different computing nodes in the computing network 100 (such as in the form of virtual machines, etc.). Thus, in such implementations, the owners 106a, 106b may interact with their UEs 108a, 108b. However, such UEs 108a, 108b may be communicatively coupled to the first and/or second computing device(s) as referred to herein.

As used herein, the term "owner" may refer to the actual/direct owner of a particular asset or may refer to a different entity that may be authorized to use/interact with various functionality described herein. For example, the "owner" could be a licensee where the actual owner has provided a license to the licensee to use certain functionality as defined by the license.

Some computing nodes of the computing network 100 are now described. These are exemplary and any number or combination of these computing nodes may be used, omitted or otherwise implemented in a different way to that shown. As highlighted already, the computing nodes may be implemented in the cloud (via a virtual machine or physical machine) or in a different part of the computing network 100. In other similar words, the computing nodes may be remote to the entities to which they are associated or such entities may implement the computing nodes (e.g., on a local computing device).

A computing node 110 associated with an admin 112 is communicatively coupled to the computing network 100. The admin 112 may be an entity that has set-up, manages or otherwise controls the access to the blockchain 104. In some cases, the admin 112 could implement or facilitate access to a blockchain platform for making use of the functionality of the blockchain 104.

A computing node 114 associated with a repository 116 is communicatively coupled to the computing network 100. The repository 116 may store any information relevant to various functions described herein. In some cases, the repository 116 may store or provide links to assets. For example, if the assets comprise a set of digital files (e.g., documents, artworks such as representations of "retro phones", images, videos, etc.), the repository 116 may store or provide links to such data files. In some cases, the repository 116 could store and/or provide access to minted digital assets. The repository 116 may or may not be public. In some cases, the repository 116 may store any other information such as cryptographic keys (e.g., public keys), digital certificates, etc.

A computing node 118 associated with a manager 120 is communicatively coupled to the computing network 100. The manager 120 may control or implement the functionality of various embodiments described herein. For example, the manager 120 may set-up, control access to or facilitate the use of a communications channel such as described herein. The role of the manager 120 may depend on how the communications channel is to be implemented. For example, the communications may be sent via the manager 120 (i.e., the computing node 118 itself) or the communications may be sent directly or indirectly between the computing nodes taking part in the communications (e.g., within a P2P network associated with the computing network 100).

In some cases, the manager 120 may implement at least some functionality of the admin 112 and/or repository 116, and vice versa.

As used herein, the term "computing node" may refer to any entity of the computing network 100 as depicted by Figure 1. The computing node may implement at least one of the various layers of a computing architecture such as comprising an application layer, transport layer and a physical layer. For example, a reference to a computing node could refer to a computing device of the physical layer, a node that implements functionality of the transport layer and/or a node that implements functionality of the application layer. Thus, a computing node may be software and/or hardware implemented (e.g., using virtual machines, physical machines, etc.).

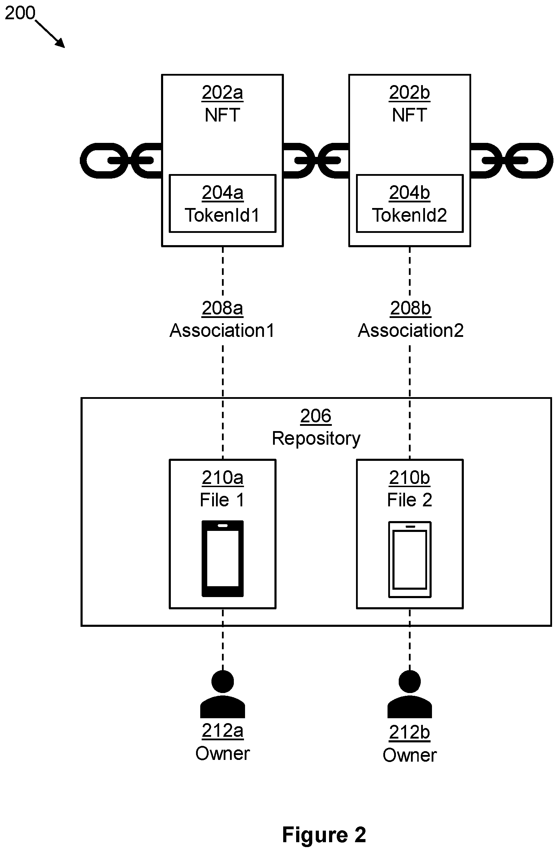

Figure 2 is a simplified schematic drawing of part of a blockchain 200 for facilitating the functionality of various embodiments. As depicted, the blockchain 200 comprises two records. In this case, a first NFT 202a and a second NFT 202b. Each NFT 202a, 202b has its own unique identifier, referred to here as Tokenld1 204a and Tokenld2 204b, respectively. These unique identifiers may refer to the "tokenld" specified by a standard such as ERC-721 that can be used on the Ethereum blockchain as ERC-721 on Ethereum Virtual Machine (EVM) compatible blockchains. However, the unique identifiers may refer to any identifiers that can be used in any type of blockchain or under any standard associated with such blockchains to implement the functionality as recited herein. As used herein, the term "first identifier" may refer to Tokenld1 204a and the term "second identifier" may refer to Tokenld2 204b.

The unique identifiers 204a, 204b provide a link to the assets referred to in Figure 1. For ease of reference, the "repository" mentioned in relation to Figure 1 is depicted as repository 206 in Figure 2. There is a (first) association "Association1" 208a between the first NFT 202a and a first asset, "File1" 210a stored or otherwise linked in the repository 206. Similarly, there is a (second) association "Association2" 208b between the second NFT 202b and a second asset, "File2" 210b stored or otherwise linked in the repository 206. In the depicted example, File1 210a and File2 210b are artworks such as "retro phones" and each artwork is unique (e.g., each artwork may have different features or "rarity" factors).

As also depicted by Figure 2, the Association1 208a provides a link between the (first) owner 212a (corresponding to owner 106a) and the File1 210a via the Tokenld1 204a specified by the NFT 202a. Similarly, the Association2 208b provides a link between the (second) owner 212b (corresponding to owner 106b) and the File2 210b via the Tokenld2 204b specified by the NFT 202b.

In some cases, an owner may own more than one asset but the unique identifier is different for each asset.

Whenever a transaction occurs e.g., where there is a transfer of ownership, this is recorded in the blockchain 200. Other information relating to use of the communications channel may or may not be recorded in the blockchain 200. In some cases, there may be different blockchains used for different purposes such as storing small amounts of information (e.g., relating to ownership) or relatively larger amounts of information (such as asset files, cryptographic keys, etc.). The (processing) cost of using a blockchain may vary on its implementation and therefore the functionality of the blockchain in relation to the different purposes may vary depending on the cost.

As already noted, NFTs may be used to represent ownership of assets including digital assets such as artwork and tangible assets such as objects in the real world. Blockchain technology may be used to enforce the ownership of such assets and provide confidence in terms of who owns which NFT.

Communications may be performed in the computing network 100. Various embodiments described herein may make use of the blockchain 104, 200 in various ways in order to facilitate such communications.

In some cases, there may be circumstances where an entity may wish to control/manage the number of entities able to communicate with one another. In some cases, there may be need for secure messaging without needing to make use of an identity such as a mobile phone number for setting up such secure messaging. In some cases, there may be need for maintaining privacy and/or security in messaging. Various embodiments described may address at least one of these problems and/or other problems such as described or highlighted below.

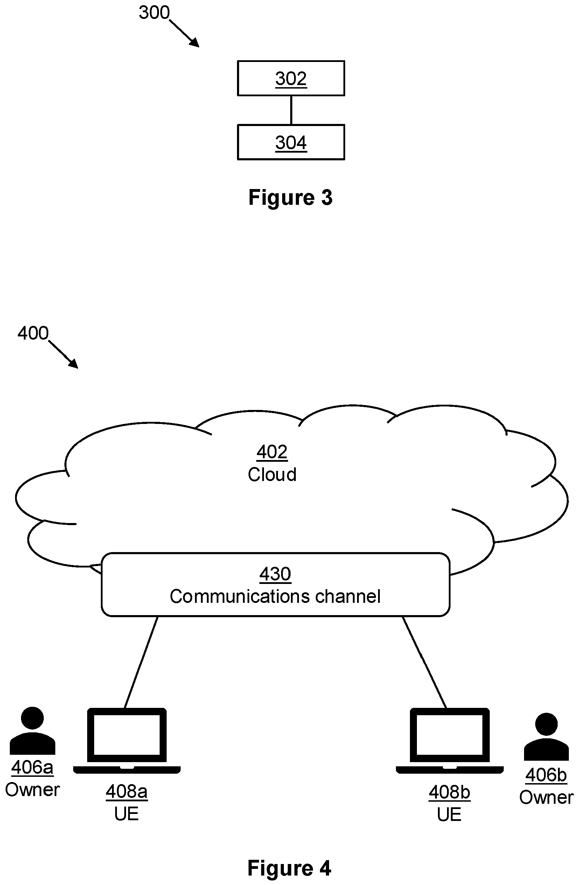

Figure 3 is a flowchart of a method 300 for facilitating communications in a computing network 100 according to an embodiment. The method 300 may be implemented by a computing node in the computing network 100. For example, the method 300 may be implemented by the manager 120 depicted by Figure 1 or any other entity that is authorized to facilitate communications in the computing network 100 and/or has access to the blockchain 104. Reference is made to Figures 1 and 2 in the description that follows.

The method 300 is a computer-implemented method (i.e., implemented by processing circuitry associated with the computing node). The method 300 facilitates communications in a computing network 100 between a first computing device 108a associated with an owner 106a, 212a of a first asset 210a and a second computing device 108b associated with an owner 106b, 212b of a second asset 210b.

A first identifier 204a is associated with the first asset 210a.

A second identifier 204b is associated with the second asset 210b.

A blockchain 104, 200 accessible to the computing network 100 is indicative of an association 208a between the first identifier 204a and the owner 212a of the first asset 210a. The blockchain 104, 200 is further indicative of an association 208b between the second identifier 204b and the owner 212b of the second asset 210b.

The method 300 comprises, at block 302, determining whether a communications channel between the first computing device 108a and the second computing device 108b can be established for facilitating communications in the computing network 100. The determining is performed by using the blockchain 104 to verify that the first computing device 108a is associated with the owner 212a of the first asset 210a and that the second computing device 108b is associated with the owner 212b of the second asset 210b.

In response to verifying that the first computing device 108a is associated with the owner 212a of the first asset 210a and the second computing device 108b is associated with the owner 212b of the second asset 210b, the method 300 further comprises, at block 304, causing the communications channel to be established between the first computing device 108a and the second computing device 108b for facilitating the communications.

The verifying may be implemented in various ways. For example, an indication may be received from and/or provided by a computing node with access to the blockchain 104 that the blockchain 104 has verified the association. In the former case, this may involve sending a request to the computing node to check whether the first computing device 108a is associated with the owner 212a of the first asset 210a and that the second computing device 108b is associated with the owner 212b of the second asset 210b. The computing node may then use the first and second identifier 204a, 204b (e.g., as provided or linked by the request) to establish whether the request is valid based on a check/reading of the blockchain 104. If the request is valid, the computing node may generate the indication. In the latter case, this may involve the computing node performing the verification itself. In some cases, the verification may be performed by a plurality of computing nodes (such as based on a consensus approach).

The computing node that performs the verification may depend on the architecture. For example, it could be envisaged that the method 300 is implemented by the computing node that has access to the blockchain 104 and can perform the check itself. On the other hand, the method 300 could be implemented by a different computing node that is communicatively coupled to the computing node that has access to the blockchain 104. In any case, the blockchain 104 may be "used" directly or indirectly by the computing node that implements the method 300.

In this manner, the communications channel may be established so that certain entities can communicate with each other. That is, the computing devices 108a, 108b associated with the respective owners 212a, 212b may communicate with each other. The blockchain 104 may facilitate such communication and prevent third parties from communicating with each other. This could be implemented as an exclusive messaging service. For example, any owner that owns an asset may communicate using the communications channel and third parties may not use the communications channel (unless they subsequently become an owner of one of the (minted) assets). The "minting" process may be controlled such that there is a fixed number of assets. Thus, an entity that controls the minting process may control how many entities can use the communications channel and other features and no new "members" may be allowed to use this service. Any entity that tries to do so may be detected/rejected based on the implementation of the smart logic of the blockchain 104, 200. As used herein, an "entity" may refer to a computing node or an individual/member with access to, attempting to access, or forming part of the computing network 100 (e.g., via the computing node). Different entities have different roles. For example, Figure 1 depicts various entities such as the owners 106a, 106b, the UEs 108a, 108b, as well as the various computing nodes such as associated with the admin 112, the repository 116 and the manager 120 (which are themselves "entities"). As used herein, a "member" may refer to an owner or a proposed owner.

Thus, it may be possible to control/manage the number of members (e.g., owners via their computing devices) able to communicate with one another. In some cases, secure messaging services may be implemented without needing to make use of an identity such as a mobile phone number for setting up such secure messaging. This may be useful where an owner does not have access to their device and/or they have privacy concerns about using a device that implements a device identifier or user identifier. Such a communications channel may maintain/ensure privacy and/or security in messaging. Various embodiments (including method 300) described may provide such technical benefits and/or other technical benefits such as highlighted below.

Figure 4 is a simplified schematic drawing of part of a computing network 400 in which various embodiments are implemented. Figure 4 depicts part of the computing network 100. In this regard, reference signs for like or similar features as in Figure 1 are incremented by 300.

As depicted by Figure 4, the computing network 400 comprises a cloud 402 (or any other infrastructure as discussed in relation to Figure 1). A first owner 406a is associated with a first UE 408a and a second owner 406b is associated with a second UE 408b. By implementing the method 300, a communications channel 430 is established between the first UE 408a and the second UE 408b.

The implementation of this communications channel 430 may vary according to the architecture of the computing network 400. For example, in some cases, the communications channel 430 may be directly between the first UE 408a and the second UE 408b (i.e., a direct link without involving other computing nodes). In some cases, the communications channel 430 may be implemented indirectly between the first UE 408a and the second UE 408b (e.g., an indirect link involving at least one other computing node).

In some cases, the establishing of the communications channel 430 may involve a "handshake" procedure where upon verifying that the first UE 408a and the second UE 408b have associated assets 210a, 210b, they can then communicate with each other.

In some cases, the establishing of the communications channel 430 may involve connecting to at least one computing node in the computing network 400 and using such at least one computing node to route communications.

In some cases, a cryptographic procedure may be implemented such as using cryptographic keys to encrypt and/or verify communications.

In some cases, establishing the communications channel may involve setting up or establishing a "transport" layer where the method 300 is implemented by a higher layer such as an "application" layer. The application layer and/or application layer may interact with other, lower, layers such as the physical layer represented by the physical architecture of the computing network 400.

Any number, variation or combination of the above implementations may be used by various embodiments described herein, as now described with reference to the following embodiments (which may relate to method 300 and other embodiments implemented by other entities in the computing network 100). Reference is made to various features of Figures 1 to 4.

In some embodiments, the first identifier 204a identifies a first non-fungible token (NFT) 202a representative of the first asset 210a and the owner 212a of the first asset 210a. The second identifier 204b identifies a second NFT 202b representative of the second asset 210b and the owner 212b of the second asset 210b.

In some embodiments, the first NFT 202a and the second NFT 202b is stored on the blockchain 200.

In some embodiments, the association 208a between the first identifier 204a and the owner 212a of the first asset 210a is represented by the first NFT 202a. Further, the association 208b between the second identifier 204b and the owner 212b of the second asset 210b is represented by the second NFT 202b.

In some embodiments, at least one of the first and second computing devices 108a, 108b comprise User Equipment (UE) accessible to the respective owner(s) 212a, 212b of the first and second assets 210a, 210b.

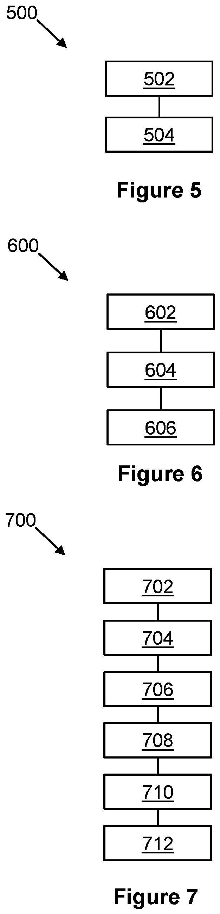

Figure 5 is a flowchart of a method 500 relating to use of a communications channel according to an embodiment. The method 500 may be implemented by a computing node in the computing network 100 in the same or similar way as described above in relation to Figure 3. Reference is made to Figures 1 to 4 in the description that follows.

The method 500 comprises, at block 502, receiving information about sending of an encrypted message via the communications channel 430.

The method 500 further comprises, at block 504, causing a message record to be stored in a computing node associated with the computing network 100. The message record is representative of the information about the sending of the encrypted message.

The method 500 may provide a record of the sending of the encrypted message (i.e., between the first and second UEs 408a, 408b via the communications channel 430). Various information may be included in the record such as described below. Various entities in the computing network 100 may store the record and the record may or may not be accessible to the owners 106a, 106b and/or other entities. The record may or may not include the content of the encrypted message, e.g., in encrypted format.

Some embodiments relating to the method 500 and other embodiments are described below.

In some embodiments, the information comprises the first and second identifiers 204a, 204b.

In some embodiments, the information comprises a timestamp associated with a send time and/or receive time of the encrypted message.

In some embodiments, the computing node is a (computing) node of a peer-to-peer (P2P) network associated with the computing network 100 (e.g., the P2P network may be part of the computing network 100 or otherwise communicatively coupled to the computing network 100).

In some embodiments, the computing node is a (computing) node of the computing network 100 authorized to store the message record.

In some embodiments, causing the message record to be stored in the computing node comprises causing the message record to added to the blockchain 104, 200 (e.g., providing the smart contract is satisfied). In some cases, the message record could be stored in the same blockchain 104 as used to enforce ownership. In some cases, the message record could be stored in a different blockchain. For ease of reference, any reference to storing any information on the blockchain (where it is not an NFT), the blockchain 104, 200 is mentioned. However, it is to be appreciated that such information could be stored on a different blockchain accessible to the computing network 100.

In some embodiments, the encrypted message comprises data (such as a written message, a character string, image, video or any other type of data) associated with the owner 212a of the first asset 210a. Further, the data is encrypted using a cryptographic key associated with the second computing device 108b.

In some embodiments, the cryptographic key comprises a public key of a key pair associated with the second computing device 108b.

For example, in order to use the communications channel for encrypted communications, a cryptographic protocol may be used. There may be various implementations. In a possible implementation, any entity (e.g., the first and second computing devices 108a, 108b) may generate cryptographic keys using an application on their respective computing device 108a, 108b. Such cryptographic keys may be a public-private key pair. The public key may be shared while the private key may be stored, or otherwise generated on demand from a unique seed using a one-way key generation protocol, on the respective computing device 108a, 108b. The public key may be used by another entity to encrypt communications while the private key may be used to sign communications (i.e., by appending a digital signature). Any appropriate entity in Figure 1 may store/transport public keys to other computing nodes so that they can encrypt their communications to a target computing device.

Figure 6 is a flowchart of a method 600 relating to messaging using a communications channel 430 according to an embodiment. The method 600 may be implemented by a computing node in the computing network 100 in the same or similar way as described above in relation to Figure 3. Reference is made to Figures 1 to 4 in the description that follows. Certain blocks of the method 600 may be omitted according to the embodiments described below.

In some embodiments, the method 600 comprises, at block 602, verifying that a request associated with the owner 212a of the first asset 210a is valid by checking an identity of the first computing device 108a. In some cases, such a check may be performed prior to causing a cryptographic key to be made available to the first computing device 108a. The identity of the first computing device 108a may refer to some indication as to the device identity such as a cryptographic identity (e.g., specified by a digital signature). In such a case, the verification may be performed by using a corresponding (public) key associated with the private key used to sign the request in the case that the request was signed by the owner 212a of the first asset 210a.

In some embodiments, the method 600 comprises, at block 604, receiving a request (as described above), associated with the owner 212a of the first asset 210a, for the cryptographic key. The request may be indicative of at least one of: the first identifier 204a and/or the second identifier 204b. The method 600 further comprises, at block 606, causing the cryptographic key associated with the second computing device 108b to be made available to the first computing device 108a.

In some embodiments, the cryptographic key is made available by using the blockchain 104, 200 to store the (e.g., public) cryptographic key. For example, an entity wishing to retrieve the cryptographic key may read the blockchain 104, 200 if authorized to do so in order to retrieve the key.

In some embodiments, the cryptographic key is made available by using the blockchain 104, 200 to indicate where in the computing network the cryptographic key can be obtained. For example, the blockchain 104, 200 may store an address or provide some other link to a computing node in the computing network 100 (e.g., a certificate authority or similar) in which the cryptographic key is stored. In some cases, such a computing node may release the cryptographic key on demand or implement a protocol that checks the identify the entity requesting the key.

In some embodiments, the cryptographic key is made available by using the blockchain 104, 200 to provide access to the cryptographic key. For example, an entity requesting the key may check the blockchain 104, 200 for information to enable the entity to obtain the key (e.g., from a computing node in the computing network 100).

In some embodiments, the cryptographic key is made available by using the blockchain 104, 200 to implement a handshake procedure between the first and second computing devices 108a, 108b based on information about how to establish the communications channel, where such information is stored in the blockchain. For example, the information may specify or facilitate control of a handshake protocol comprising instructions on how the first and second computing devices 108a, 108b are to connect with each other to form the communications channel 430. For example, a protocol such as based on a Secure Sockets Layer (SSL) handshake and/or a Transport Layer Security (TLS) handshake may be implemented. In another example, the blockchain 104, 200 may point to a computing node through which communications can be routed between the first and second computing devices 108a, 108b as part of the handshake procedure.

In some embodiments, a smart contract implemented by the blockchain 104, 200 may enforce that cryptographic key is to be made available and/or otherwise establish the communications channel. For example, an attempt, whether successful or not, to establish the communications channel may be recorded in the blockchain 104, 200. As part of the interaction between the first and second computing devices 108a, 108b and the blockchain 104, 200, the smart contract may check that the first and/or second computing devices 108a, 108b are authorized to receive the key. If authorized, as part of recording a transaction, the interaction may involve the first and/or second computing devices 108a, 108b receiving the cryptographic key, a link to the key or another key to facilitate access to a repository containing the key.

In some embodiments, the received information about the sending of the encrypted message via the communications channel 430 comprises a confirmation that the second computing device 108b received the encrypted message; and/or a signature applied, by the second computing device 108b, to the confirmation. Such a confirmation may be a binary indicator, text string or otherwise. Further, such a confirmation may be recorded in any appropriate way in the blockchain 104, 200 (e.g., the actual received information itself or a representation of such information).

In some embodiments, the received information about the sending of the encrypted message via the communications channel 430 comprises: a confirmation that the first computing device 108a sent the encrypted message; and/or a signature applied, by the first computing device 108a, to the confirmation.

Such confirmation(s) may be a binary indicator, text string or otherwise. Further, such confirmation(s) may be recorded in any appropriate way in the blockchain 104, 200 (e.g., the actual received information itself or a representation of such information).

The confirmation(s) may allow the blockchain 104, 200 to store a record of the communications that have happened. The level of information stored and whether such information is anonymous/public may depend on the implementation.

Figure 7 is a flowchart of a method 700 relating to use of a blockchain 104 according to an embodiment. The method 700 may be implemented by a computing node in the computing network 100 in the same or similar way as described above in relation to Figure 3. Reference is made to Figures 1 to 4 in the description that follows. Certain blocks of the method 700 may be omitted according to the embodiments described below.

In some embodiments, the method 700 comprises, at block 702, minting a plurality of assets, the plurality of assets comprising the first and second assets 210a, 210b.

The method 700 further comprises, at block 704, deploying a smart contract to enforce transactions on the blockchain.

The method 700 further comprises, at block 706, receiving a transaction request associated with a first proposed owner to record that the first proposed owner is to take ownership of a selected one of the plurality of assets.

In response to verifying that the transaction request satisfies the smart contract, the method 700 further comprises, at block 708, causing a transaction record to be added to the blockchain 104 to link the first proposed owner to the selected one of the plurality of assets.

Thus, in such embodiments, a plurality of assets (such as a fixed number of unique assets with varying rarity features) may be minted and when a proposed owner wishes to acquire an asset, they may cause their computing device to send the transaction request to the relevant computing node (e.g., through use of their digital wallet and/or application on their device). The first proposed owner may have selected one of the assets or otherwise have the asset assigned to them, depending on the implementation. If the transaction request satisfies the smart contract (e.g., if payment has been made and/or the request is deemed valid), the transaction is recorded as the transaction record. The transaction record may associate the owner with the asset (e.g., in some cases, the transaction record may comprise or represent an NFT).

In some embodiments, the method 700 comprises, at block 710, receiving an additional transaction request associated with a second proposed owner to record that the second proposed owner is to take ownership of the selected one of the plurality of assets.

In response to verifying that the additional transaction request satisfies the smart contract, the method 700 further comprises, at block 712, causing an additional transaction record to be added to the blockchain to link the second proposed owner to the selected one of the plurality of assets.

Such embodiments refer to the change of ownership of a selected asset and how this may be reflected within the blockchain (e.g., via an additional transaction record or NFT). Each transaction record associate with a particular asset uses the same unique identifier. However, the transaction record may provide the link to the owner at that time.

In some embodiments, the communications channel 430 is established by providing information needed to set up the communications channel 430 to the first and/or second computing device 108a, 108b.

In some embodiments, the provided information comprises information about how to access a peer-to-peer, P2P, network associated with the computing network 100 for facilitating the communications channel 430. Such information may include network addresses, access codes and/or other data that allows communications to be routed via the P2P network.

In some embodiments, the provided information comprises information about a security procedure to be implemented between the first and second computing device 108a, 108b in order to establish the communications channel 430. This may refer to the handshake procedure, information about a security protocol that needs to be followed or other information that allows the first and second computing device 108a, 108b to determine what needs to be done to establish the communications channel 430 therebetween.

In some embodiments, the provided information comprises information about a cryptographic key such as described above.

In some embodiments, the provided information comprises information about how to access the cryptographic key such as described above.

In some embodiments, the provided information comprises information about an identity of and/or link to (e.g., a device identifier/address) the first and/or second computing device 108a, 108b.

In some embodiments, any number, variation or combination of such provided information may allow the first and second computing device 108a, 108b to "locate" each other within the computing network 100 and thereby initiate communications with each other provided they have followed the protocol specified or enforced via the blockchain 104.

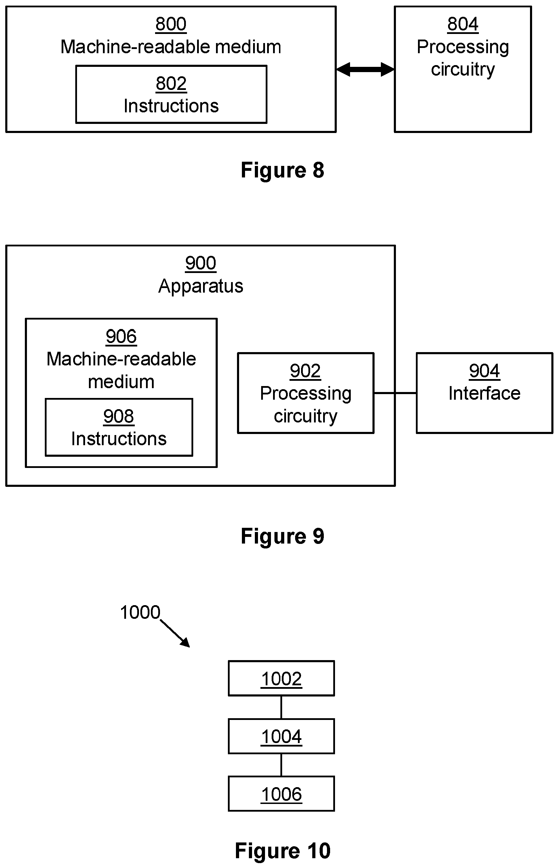

Figure 8 schematically illustrates a (non-transitory) machine-readable medium 800 for implementing various embodiments described herein. The machine-readable medium 800 may be implemented by (e.g., processing circuitry of) a computing node such as described in relation to Figure 3 (and with reference to Figure 1) and/or processing circuity of a different computing node communicatively coupled to the computing node implementing the machine-readable medium 800.

The non-transitory machine-readable medium 800 stores instructions 802 which, when executed by processing circuitry 804, cause the processing circuitry 804 to implement the methods of any of the embodiments described in relation to Figures 3 to 8.

Figure 9 is a simplified schematic drawing of an apparatus 900 for implementing various embodiments described herein. The apparatus 900 may be implemented by a computing node such as described in relation to Figure 3.

In this embodiment, the apparatus 900 provides the same functionality as the method 300. The apparatus 900 comprises processing circuitry 902 communicatively coupled to an interface 904 (such as a communications interface like a port, wireless channel, wired channel, etc.) for communicating with the computing network 100. The apparatus 900 further comprises a machine-readable medium 906 (e.g., non-transitory or otherwise) storing instructions 908 which, when executed by the processing circuitry 902, cause the processing circuitry 902 to implement the method 300.

In other embodiments, the apparatus 900 provides the same functionality as any of the embodiments relating to Figures 3 to 8.

Figure 10 is a flowchart of a method 1000 for facilitating communications in a computing network 100 according to an embodiment. Whereas method 300 refers to a computing node (other than the first or second computing device 108a, 108b), the method 1000 is implemented by the first computing device 108a. Reference is made to the above description with regards to the implementation of the method 1000 and related embodiments. The functionality provided by embodiments relating to Figures 3 to 8 may have corresponding functionality and/or applicability to the method 1000/related embodiments, and vice versa.

The method 1000 is computer-implemented method for facilitating communications in a computing network 100 between a first computing device 108a associated with an owner 106a, 212a of a first asset 210a and a second computing device 108b associated with an owner 106b, 212b of a second asset 210b.

A first identifier 204a is associated with the first asset 210a.

A second identifier 204b is associated with the second asset 210b.

A blockchain 104, 200 accessible to the computing network 100 is indicative of: an association 208a between the first identifier 204a and the owner 212a of the first asset 210a; and an association 208b between the second identifier 204b and the owner 212b of the second asset 210b.

The method 1000 comprises, at block 1002, receiving an indication that a communications channel 430 can be established between the first computing device 108a and the second computing device 108b based on verification, using the blockchain 104, that the first computing device 108a is associated with the owner 212a of the first asset 210a and the second computing device 108b is associated with the owner 212b of the second asset 210a. This part of block 1002 is related to the applicable part of the method 300.

Block 1002 further comprises receiving data for sending to the second computing device. This data may refer to a message or other data input by the owner 212a.

The method 1000 further comprises, at block 1004, establishing the communications channel 430 (as described above).

The method 1000 further comprises, at block 1006, sending the data securely to the second computing device 108b via the communications channel 430.

The method 1000 may facilitate the functionality mentioned above in relation to the other embodiments and/or provide the same, similar or corresponding technical benefits. For example, the method 1000 may provide a way to connect the two owners 212a, 212b via their respective assets 210a, 210b.

Some embodiments relating to the method 1000 are described below.

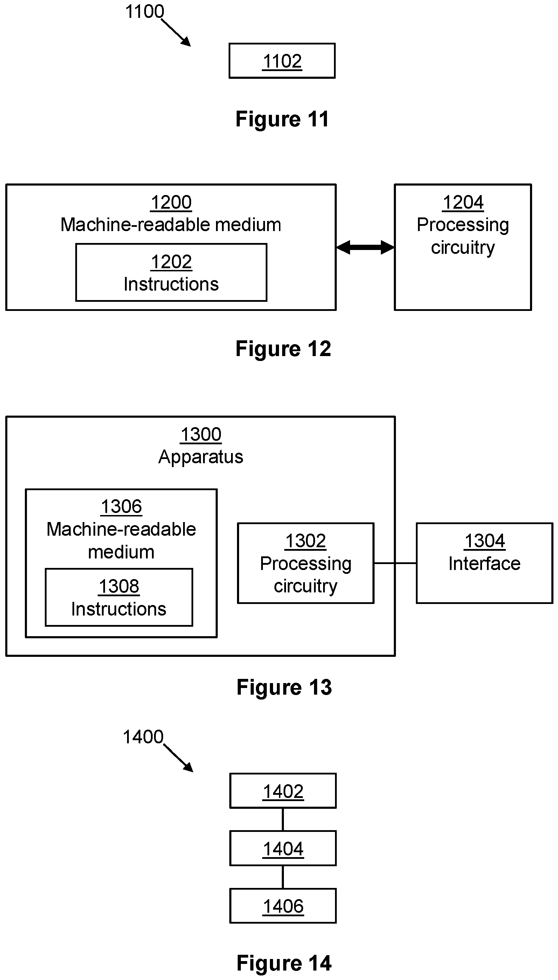

Figure 11 is a flowchart of a method 1100 relating to use of a communications channel according to an embodiment. The method 1100 may be implemented in the same way as the method 1000.

In some embodiments, the method 1100 further comprises, at block 1102, sending, to a computing node associated with the computing network, information about the sending of the data. The computing node (e.g., as referred to in the method 300) is configured to store a message record representative of the information about the sending of the data. This storing of the message record may be in the recipient computing node itself or another computing node.

In some embodiments, the information comprises the first and second identifiers 204a, 204b.

In some embodiments, corresponding functionality relating to the embodiments mentioned in relation to Figures 3 to 8 may be implemented by the first computing device 108a.

Figure 12 schematically illustrates a (non-transitory) machine-readable medium 1200 for implementing various embodiments described herein. The machine-readable medium 1200 may be implemented by (e.g., processing circuitry of) the first computing device 108a.

The non-transitory machine-readable medium 1200 stores instructions 1202 which, when executed by processing circuitry 1204, cause the processing circuitry 1204 to implement the methods relating to any of the embodiments described in relation to Figures 11 to 12.

Figure 13 is a simplified schematic drawing of an apparatus 1300 for implementing various embodiments described herein. The apparatus 1300 is implemented by the first computing device 108a.

In this embodiment, the apparatus 1300 provides the same functionality as the method 1000. The apparatus 1300 comprises processing circuitry 1302 communicatively coupled to an interface 1304 (such as a communications interface like a port, wireless channel, wired channel, etc.) for communicating with the computing network 100. The apparatus 1300 further comprises a machine-readable medium 1306 (e.g., non-transitory or otherwise) storing instructions 1308 which, when executed by the processing circuitry 1302, cause the processing circuitry 1302 to implement the method 1000.

In other embodiments, the apparatus 1300 provides the same functionality as any of the embodiments relating to Figures 11 to 12.

Figure 14 is a flowchart of a method 1400 for facilitating communications in a computing network 100 according to an embodiment. Whereas method 1000 refers to the first computing device 108a, the method 1400 is implemented by the second computing device 108b. Reference is made to the above description with regards to the implementation of the method 1000 and related embodiments. The functionality provided by embodiments relating to Figures 3 to 8 may have corresponding functionality and/or applicability to the method 1400/related embodiments, and vice versa.

The method 1400 is computer-implemented method for facilitating communications in a computing network 100 between a first computing device 108a associated with an owner 106a,212a of a first asset 210a and a second computing device 108b associated with an owner 106b, 212b of a second asset 210b.

A first identifier 204a is associated with the first asset 210a.

A second identifier 204b is associated with the second asset 210b.

A blockchain 104, 200 accessible to the computing network 100 is indicative of: an association 208a between the first identifier 204a and the owner 212a of the first asset 210a; and an association 208b between the second identifier 204b and the owner 212b of the second asset 210b.

The method 1400 comprises, at block 1402, receiving an indication that a communications channel 430 can be established between the first computing device 108a and the second computing device 108b based on verification, using the blockchain 104, that the first computing device 108a is associated with the owner 212a of the first asset 210a and the second computing device 108b is associated with the owner 212b of the second asset 210b.

The method 1400 further comprises, at block 1404, establishing the communications channel 430.

The method 1400 further comprises, at block 1406, receiving data sent securely by the first computing device 108a (as in method 1000) via the communications channel 430.

The method 1400 is thus related to the method 1000 and may facilitate the functionality mentioned above in relation to the other embodiments and/or provide the same, similar or corresponding technical benefits. For example, the method 1400 may provide a way to connect the two owners 212a, 212b via their respective assets 210a, 210b.

Some embodiments relating to the method 1400 are described below.

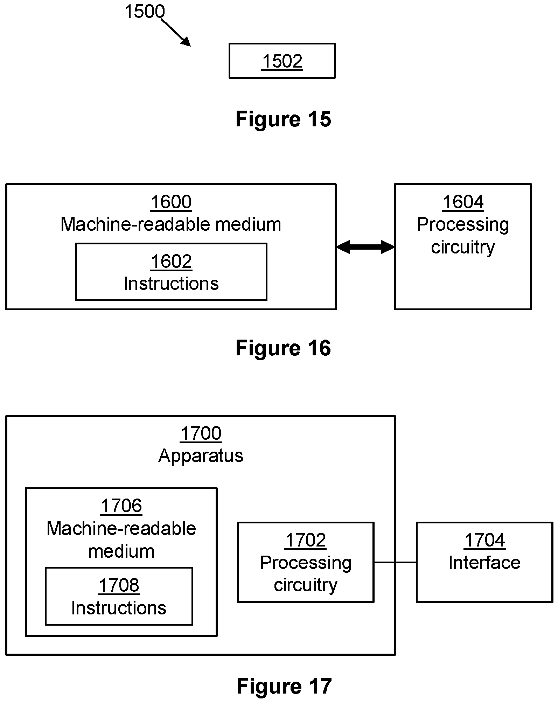

Figure 15 is a flowchart of a method 1500 relating to use of a communications channel according to an embodiment. The method 1500 may be implemented in the same way as the method 1400.

The method 1500 further comprises, at block 1502, sending, to a computing node associated with the computing network, information about the receiving of the data. The computing node is configured to store a message record representative of the information about the receiving of the data. This storing of the message record may be in the recipient computing node itself or another computing node.

Figure 16 schematically illustrates a (non-transitory) machine-readable medium 1600 for implementing various embodiments described herein. The machine-readable medium 1600 may be implemented by (e.g., processing circuitry of) the second computing device 108b.

The non-transitory machine-readable medium 1600 stores instructions 1602 which, when executed by processing circuitry 1604, cause the processing circuitry 1604 to implement the methods relating to any of the embodiments described in relation to Figures 14 to 15.

Figure 17 is a simplified schematic drawing of an apparatus 1700 for implementing various embodiments described herein. The apparatus 1700 is implemented by the second computing device 108b.

In this embodiment, the apparatus 1700 provides the same functionality as the method 1400. The apparatus 1700 comprises processing circuitry 1702 communicatively coupled to an interface 1704 (such as a communications interface like a port, wireless channel, wired channel, etc.) for communicating with the computing network 100. The apparatus 1700 further comprises a machine-readable medium 1706 (e.g., non-transitory or otherwise) storing instructions 1708 which, when executed by the processing circuitry 1702, cause the processing circuitry 1702 to implement the method 1400.

In other embodiments, the apparatus 1700 provides the same functionality as any of the embodiments relating to Figures 14 to 15.

Any of the blocks, nodes, instructions or modules described in relation to the figures may be combined with, implement the functionality of or replace any of the blocks, nodes, instructions or modules described in relation to any other of the figures. For example, methods may be implemented as machine-readable media or apparatus, machine-readable media may be implemented as methods or apparatus, and apparatus may be implemented as machine-readable media or methods. Further, any of the functionality described in relation to any one of a method, machine readable medium or apparatus described herein may be implemented in any other one of the method, machine readable medium or apparatus described herein. Any claims written in single dependent form may be re-written, where appropriate, in multiple dependency form since the various examples described herein may be combined with each other.

Examples in the present disclosure can be provided as methods, systems or as a combination of machine-readable instructions and processing circuitry. Such machine-readable instructions may be included on a non-transitory machine (for example, computer) readable storage medium (including but not limited to disc storage, CD-ROM, optical storage, flash storage, etc.) having computer readable program codes therein or thereon.

The present disclosure is described with reference to flow charts and block diagrams of the method, devices and systems according to examples of the present disclosure. Although the flow charts described above show a specific order of execution, the order of execution may differ from that which is depicted. Blocks described in relation to one flow chart may be combined with those of another flow chart. It shall be understood that each block in the flow charts and/or block diagrams, as well as combinations of the blocks in the flow charts and/or block diagrams can be realized by machine readable instructions.

The machine-readable instructions may, for example, be executed by a general-purpose computer, a special purpose computer, an embedded processor or processors of other programmable data processing devices to realize the functions described in the description and diagrams. In particular, a processor or processing circuitry, or a module thereof, may execute the machine-readable instructions. Thus, functional nodes, modules or apparatus of the system and other devices may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine-readable instructions may also be stored in a computer readable storage that can guide the computer or other programmable data processing devices to operate in a specific mode.

Such machine readable instructions may also be loaded onto a computer or other programmable data processing devices, so that the computer or other programmable data processing devices perform a series of operations to produce computer-implemented processing, thus the instructions executed on the computer or other programmable devices realize functions specified by block(s) in the flow charts and/or in the block diagrams.

Further, the teachings herein may be implemented in the form of a computer program product, the computer program product being stored in a storage medium and comprising a plurality of instructions for making a computer device implement the methods recited in the examples of the present disclosure.

While the method, apparatus and related aspects have been described with reference to certain examples, various modifications, changes, omissions, and substitutions can be made without departing from the scope of the present disclosure. It is intended, therefore, that the method, apparatus and related aspects be limited by the scope of the following claims and their equivalents. It should be noted that the above-mentioned examples illustrate rather than limit what is described herein, and that many implementations may be designed without departing from the scope of the appended claims. Features described in relation to one example may be combined with features of another example.

The word "comprising" does not exclude the presence of elements other than those listed in a claim, "a" or "an" does not exclude a plurality, and a single processor or other unit may fulfil the functions of several units recited in the claims.

The features of any dependent claim may be combined with the features of any of the independent claims or other dependent claims.

## Claims

1. A computer-implemented method (300) in a computing node (118) for facilitating communications in a computing network (100) between a first computing device (108a) associated with an owner (106a, 212a) of a first asset (210a) and a second computing device (108b) associated with an owner (106b, 212b) of a second asset (210b), wherein:
a first identifier (204a) is associated with the first asset, wherein the first identifier identifies a first non-fungible token, NFT, (202a) representative of the first asset and the owner of the first asset;
a second identifier (204b) is associated with the second asset, wherein the second identifier identifies a second NFT (202b) representative of the second asset and the owner of the second asset; and
the computing node is configured to use a blockchain (104, 200) accessible to the computing network, and wherein the blockchain is indicative of:
an association (208a) between the first identifier and the owner of the first asset; and
an association (208b) between the second identifier and the owner of the second asset, and
wherein the method comprises:
determining (302) whether a communications channel (430) between the first computing device and the second computing device can be established for facilitating communications in the computing network by using the blockchain to verify that the first computing device is associated with the owner of the first asset and the second computing device is associated with the owner of the second asset, wherein a smart contract implemented by the blockchain is configured to enforce that a cryptographic key is to be made available to the first and/or second computing devices to establish the communications channel if the first and/or second computing devices are authorized to receive the cryptographic key; and
in response to verifying that the first computing device is associated with the owner of the first asset and the second computing device associated with the owner of the second asset, causing (304) the communications channel to be established between the first computing device and the second computing device for facilitating the communications.

2. The method of claim 1, wherein:
the first NFT and the second NFT is stored on the blockchain;
the association between the first identifier and the owner of the first asset is represented by the first NFT; and the association between the second identifier and the owner of the second asset is represented by the second NFT; and/or
at least one of the first and second computing devices comprise User Equipment, UE, accessible to the respective owner(s) of the first and second assets.

3. The method (500) of any of claims 1 or 2, comprising:
receiving (502) information about sending of an encrypted message via the communications channel; and
causing (504) a message record to be stored in a computing node associated with the computing network, wherein the message record is representative of the information about the sending of the encrypted message.

4. The method of claim 3, wherein the information comprises at least one of
i. the first and second identifiers; and
ii. a timestamp associated with a send time and/or receive time of the encrypted message;
and/or
wherein the computing node is one of:
i. a node of a peer-to-peer, P2P, network associated with the computing network; or
ii. a node of the computing network authorized to store the message record; and/or
wherein causing the message record to be stored in the computing node comprises causing the message record to be added to the blockchain.

5. The method of claim 3 or claim 4, wherein the encrypted message comprises data associated with the owner of the first asset, and wherein the data is encrypted using a cryptographic key associated with the second computing device.

6. The method (600) of claim 5, comprising:
receiving (604) a request, associated with the owner of the first asset, for the cryptographic key, wherein the request is indicative of at least one of: the first identifier and/or the second identifier; and
causing (606) the cryptographic key associated with the second computing device to be made available to the first computing device.

7. The method (600) of claim 6, further comprising, prior to causing the cryptographic key to be made available to the first computing device, verifying (602) that the request is valid by checking an identity of the first computing device;
and/or
wherein the cryptographic key is made available by using the blockchain to at least one of:
store the cryptographic key;
indicate where in the computing network the cryptographic key can be obtained;
provide access to the cryptographic key; and/or
implement a handshake procedure between the first and second computing devices based on information about how to establish the communications channel stored in the blockchain.

8. The method of any of claims 3 to 7, wherein the received information about the sending of the encrypted message via the communications channel comprises:
i. a confirmation that the second computing device received the encrypted message; and a signature applied, by the second computing device, to the confirmation; and/or
ii. a confirmation that the first computing device sent the encrypted message; and a signature applied, by the first computing device, to the confirmation.

9. The method (700) of any of claims 1 to 8, comprising:
minting (702) a plurality of assets, the plurality of assets comprising the first and second assets;
deploying (704) a smart contract to enforce transactions on the blockchain;
receiving (706) a transaction request associated with a first proposed owner to record that the first proposed owner is to take ownership of a selected one of the plurality of assets;
in response to verifying that the transaction request satisfies the smart contract, causing (708) a transaction record to be added to the blockchain to link the first proposed owner to the selected one of the plurality of assets.

10. Apparatus (900) for facilitating communications in a computing network (100) between a first computing device (108a) associated with an owner (106a, 212a) of a first asset (210a) and a second computing device (108b) associated with an owner (106b, 212b) of a second asset (210b), wherein:
a first identifier (204a) is associated with the first asset, wherein the first identifier identifies a first non-fungible token, NFT, (202a) representative of the first asset and the owner of the first asset;
a second identifier (204b) is associated with the second asset, wherein the second identifier identifies a second NFT (202b) representative of the second asset and the owner of the second asset; and
the apparatus is configured to use a blockchain (104, 200) accessible to the computing network, wherein the blockchain is indicative of:
an association (208a) between the first identifier and the owner of the first asset; and
an association (208b) between the second identifier and the owner of the second asset, and
wherein the apparatus comprises:
processing circuitry (902) communicatively coupled to an interface (904) for communicating with the computing network; and
a machine-readable medium (906) storing instructions (908) which, when executed by the processing circuitry, cause the processing circuitry to:
determine (302) whether a communications channel (430) between the first computing device and the second computing device can be established for facilitating communications in the computing network by using the blockchain to verify that the first computing device is associated with the owner of the first asset and the second computing device is associated with the owner of the second asset, wherein a smart contract implemented by the blockchain is configured to enforce that a cryptographic key is to be made available to the first and/or second computing devices to establish the communications channel if the first and/or second computing devices are authorized to receive the cryptographic key; and
in response to verifying that the first computing device is associated with the owner of the first asset and the second computing device associated with the owner of the second asset, cause (304) the communications channel to be established between the first computing device and the second computing device for facilitating the communications.

11. A computer-implemented method (1000) for facilitating communications in a computing network (100) between a first computing device (108a) associated with an owner (106a,212a) of a first asset (210a) and a second computing device (108b) associated with an owner (106b, 212b) of a second asset (210b), wherein:
the method (1000) is implemented by the first computing device;
a first identifier (204a) is associated with the first asset, wherein the first identifier identifies a first non-fungible token, NFT, (202a) representative of the first asset and the owner of the first asset;
a second identifier (204b) is associated with the second asset, wherein the second identifier identifies a second NFT (202b) representative of the second asset and the owner of the second asset; and
a blockchain (104, 200), used by a computing node of the computing network, accessible to the computing network is indicative of:
an association (208a) between the first identifier and the owner of the first asset; and
an association (208b) between the second identifier and the owner of the second asset, and
wherein the method (1000) comprises:
receiving (1002):
an indication that a communications channel (430) can be established between the first computing device and the second computing device based on verification, using the blockchain, that the first computing device is associated with the owner of the first asset and the second computing device is associated with the owner of the second asset, wherein a smart contract implemented by the blockchain is configured to enforce that a cryptographic key is to be made available to the first and/or second computing devices to establish the communications channel if the first and/or second computing devices are authorized to receive the cryptographic key; and
data for sending to the second computing device;
establishing (1004) the communications channel; and
sending (1006) the data securely to the second computing device via the communications channel.

12. Apparatus (1300) for facilitating communications in a computing network (100) between a first computing device (108a) associated with an owner (106a,212a) of a first asset (210a) and a second computing device (108b) associated with an owner (106b, 212b) of a second asset (210b), wherein:
the apparatus (1300) is implemented by the first computing device;
a first identifier (204a) is associated with the first asset, wherein the first identifier identifies a first non-fungible token, NFT, (202a) representative of the first asset and the owner of the first asset;
a second identifier (204b) is associated with the second asset, wherein the second identifier identifies a second NFT (202b) representative of the second asset and the owner of the second asset; and
a blockchain (104, 200), used by a computing node of the computing network, accessible to the computing network is indicative of:
an association (208a) between the first identifier and the owner of the first asset; and
an association (208b) between the second identifier and the owner of the second asset, and
wherein the apparatus comprises:
processing circuitry (1302) communicatively coupled to an interface (1304) for communicating with the computing network; and
a machine-readable medium (1306) storing instructions (1308) which, when executed by the processing circuitry, cause the processing circuitry to:
receive (1002):
an indication that a communications channel (430) can be established between the first computing device and the second computing device based on verification, using the blockchain, that the first computing device is associated with the owner of the first asset and the second computing device associated with the owner of the second asset, wherein a smart contract implemented by the blockchain is configured to enforce that a cryptographic key is to be made available to the first and/or second computing devices to establish the communications channel if the first and/or second computing devices are authorized to receive the cryptographic key; and
data for sending to the second computing device;
establish (1004) the communications channel; and
send (1006) the data securely to the second computing device via the communications channel.

13. A computer-implemented method (1400) for facilitating communications in a computing network (100) between a first computing device (108a) associated with an owner (106a,212a) of a first asset (210a) and a second computing device (108b) associated with an owner (106b, 212b) of a second asset (210b), wherein:
the method (1400) is implemented by the second computing device;
a first identifier (204a) is associated with the first asset, wherein the first identifier identifies a first non-fungible token, NFT, (202a) representative of the first asset and the owner of the first asset;
a second identifier (204b) is associated with the second asset, wherein the second identifier identifies a second NFT (202b) representative of the second asset and the owner of the second asset; and
a blockchain (104, 200), used by a computing node of the computing network, accessible to the computing network is indicative of:
an association (208a) between the first identifier and the owner of the first asset; and
an association (208b) between the second identifier and the owner of the second asset, and
wherein the method comprises:
receiving (1402) an indication that a communications channel (430) can be established between the first computing device and the second computing device based on verification, using the blockchain, that the first computing device is associated with the owner of the first asset and the second computing device associated with the owner of the second asset, wherein a smart contract implemented by the blockchain is configured to enforce that a cryptographic key is to be made available to the first and/or second computing devices to establish the communications channel if the first and/or second computing devices are authorized to receive the cryptographic key;
establishing (1404) the communications channel; and
receiving (1406) data sent securely by the first computing device via the communications channel.

14. A non-transitory machine-readable medium (1600) storing instructions (1602) which, when executed by processing circuitry (1604), cause the processing circuitry to implement the methods of any of claims 1 to 9, claim 11 or claim 13.

15. Apparatus (1700) for facilitating communications in a computing network (100) between a first computing device (108a) associated with an owner (106a,212a) of a first asset (210a) and a second computing device (108b) associated with an owner (106b, 212b) of a second asset (210b), wherein:
the apparatus (1700) is implemented by the second computing device;
a first identifier (204a) is associated with the first asset, wherein the first identifier identifies a first non-fungible token, NFT, (202a) representative of the first asset and the owner of the first asset;
a second identifier (204b) is associated with the second asset, wherein the second identifier identifies a second NFT (202b) representative of the second asset and the owner of the second asset; and
a blockchain (104, 200), used by a computing node of the computing network, accessible to the computing network is indicative of:
an association (208a) between the first identifier and the owner of the first asset; and
an association (208b) between the second identifier and the owner of the second asset, and
wherein the apparatus comprises:
processing circuitry (1702) communicatively coupled to an interface (1704) for communicating with the computing network; and
a machine-readable medium (1706) storing instructions (1708) which, when executed by the processing circuitry, cause the processing circuitry to:
receive (1402) an indication that a communications channel (430) can be established between the first computing device and the second computing device based on verification, using the blockchain, that the first computing device is associated with the owner of the first asset and the second computing device associated with the owner of the second asset, wherein a smart contract implemented by the blockchain is configured to enforce that a cryptographic key is to be made available to the first and/or second computing devices to establish the communications channel if the first and/or second computing devices are authorized to receive the cryptographic key;
establish (1404) the communications channel; and
receive (1406) data sent securely by the first computing device via the communications channel.

## Patentansprüche

1. ein computerimplementiertes Verfahren (300) in einem Computerknoten (118), um eine Kommunikation in einem Computernetzwerk (100) zwischen einem ersten Computergerät (108a), das einem Besitzer (106a, 212a) eines ersten Vermögenswertes (210a) zugeordnet ist, und einem zweiten Computergerät (108b), das einem Besitzer (106b, 212b) eines zweiten Vermögenswertes (210b) zugeordnet ist, zu ermöglichen, wobei
ein erster Identifikator (204a) mit dem ersten Vermögenswert verbunden ist, wobei der erste Identifikator ein erstes nicht-fungibles Token, NFT, (202a) identifiziert, das den ersten Vermögenswert und den Besitzer des ersten Vermögenswerts repräsentiert;
einen zweiten Identifikator (204b), der mit dem zweiten Vermögenswert assoziiert wird, wobei der zweite Identifikator ein zweites NFT (202b) bezeichnet, der den zweiten Vermögenswert und den Besitzer des zweiten Vermögenswerts darstellt; und
der Computerknoten konfiguriert ist, um eine Blockchain (104, 200) zu verwenden, auf die das Computernetzwerk zugreifen kann, und wobei die Blockchain folgendes anzeigt:
eine Zuordnung (208a) zwischen dem ersten Identifikator und dem Besitzer des ersten Vermögenswerts; und
eine Zuordnung (208b) zwischen dem zweiten Identifikator und dem Besitzer des zweiten Vermögenswerts; und
wobei das Verfahren umfasst
Bestimmen (302), ob ein Kommunikationskanal (430) zwischen dem ersten Computergerät und dem zweiten Computergerät eingerichtet werden kann, um die Kommunikation in dem Computernetzwerk zu erleichtern, unter Verwendung der Blockchain, um zu verifizieren, dass das erste Computergerät mit dem Besitzer des ersten Vermögenswerts verbunden ist und dass das zweite Computergerät mit dem Besitzer des zweiten Vermögenswerts verbunden ist, wobei ein Smart Contract, der durch die Blockchain implementiert ist, so konfiguriert ist, dass er durchsetzt, dass ein kryptografischer Schlüssel dem ersten und/oder dem zweiten Computergerät zum Einrichten des Kommunikationskanals zur Verfügung gestellt wird, wenn das erste und/oder das zweite Computergerät zum Empfangen des kryptografischen Schlüssels autorisiert ist; und
das Einrichten (304) des Kommunikationskanals zwischen dem ersten Computergerät und dem zweiten Computergerät zum Ermöglichen der Kommunikation als Reaktion auf das Verifizieren, dass das erste Computergerät mit dem Besitzer des ersten Vermögenswerts in Verbindung ist und dass das zweite Computergerät mit dem Besitzer des zweiten Vermögenswerts in Verbindung ist, veranlasst wird.

2. Verfahren nach Anspruch 1, bei dem:
das erste NFT und das zweite NFT in der Blockchain gespeichert sind;
die Zuordnung zwischen dem ersten Identifikator und dem Besitzer des ersten Vermögenswerts durch das erste NFT dargestellt wird; und die Zuordnung zwischen dem zweiten Identifikator und dem Besitzer des zweiten Vermögenswerts durch die zweite NFT dargestellt wird; und/oder
mindestens eines der ersten und zweiten Computergeräte eine Benutzerausrüstung, UE, umfasst, die für den/die jeweiligen Besitzer des ersten und zweiten Vermögenswerts zugänglich ist.

3. Verfahren (500) nach einem der Ansprüche 1 oder 2, umfassend Informationen über das Senden einer verschlüsselten Nachricht über den Kommunikationskanal zu empfangen (502); und
Veranlassen (504), dass ein Nachrichtendatensatz in einem Computerknoten gespeichert wird, der mit dem Computernetzwerk verbunden ist, wobei der Nachrichtendatensatz die Information über das Senden der verschlüsselten Nachricht repräsentiert.

4. Verfahren nach Anspruch 3, wobei die Information wenigstens eine der nachstehenden Angaben umfasst
i. den ersten und/oder den zweiten Identifikator; und
ii. einen Zeitstempel, der einer Zeit zugeordnet ist, zu der die verschlüsselte Nachricht gesendet und/oder empfangen wurde;
und/oder
wobei der Computerknoten einer der folgenden ist
i. ein Knoten eines Peer-to-Peer-Netzwerks (P2P), das mit dem Computernetzwerk verbunden ist; oder
oder und/oder
ii. ein Knoten des Computernetzwerks, der autorisiert ist, den Nachrichteneintrag zu speichern; wobei das Veranlassen, dass der Nachrichteneintrag in dem Computerknoten gespeichert wird, das Veranlassen umfasst, dass der Nachrichteneintrag zu der Blockchain hinzugefügt wird.

5. Verfahren nach Anspruch 3 oder 4, wobei die verschlüsselte Nachricht Daten umfasst, die dem Besitzer des ersten Vermögenswerts zugeordnet sind, und wobei die Daten unter Verwendung eines dem zweiten Computergerät zugeordneten Verschlüsselungsschlüssels verschlüsselt werden.

6. Verfahren (600) nach Anspruch 5, umfassend
Empfangen (604) einer mit dem Besitzer des ersten Vermögenswerts verbundenen Anforderung des kryptografischen Schlüssels, wobei die Anforderung mindestens eines der folgenden angibt: den ersten Identifikator und/oder den zweiten Identifikator; und
Bewirken (606), dass der dem zweiten Computergerät zugeordnete kryptografische Schlüssel für das erste Computergerät verfügbar ist.

7. Verfahren (600) nach Anspruch 6, das ferner vor dem Bereitstellen des kryptografischen Schlüssels für das erste Computergerät das Verifizieren (602) umfasst, dass die Anfrage gültig ist, indem eine Identität des ersten Computergeräts verifiziert wird;
und/oder
wobei der kryptografische Schlüssel mindestens einem der folgenden durch Verwendung der Blockchain zur Verfügung gestellt wird:
Speichern des kryptografischen Schlüssels;
zu spezifizieren, wo in dem Computernetzwerk der kryptografische Schlüssel erhalten werden kann; den Zugriff auf den kryptografischen Schlüssel zu ermöglichen; und/oder
ein Handshake-Prozess zwischen dem ersten und dem zweiten Computergerät auf der Grundlage von Informationen darüber, wie der Kommunikationskanal eingerichtet wird, die in der Blockchain gespeichert sind zu implementieren.

8. Verfahren nach einem der Ansprüche 3 bis 7, wobei die empfangenen Informationen über die verschlüsselte Nachrichtenübertragung über den Kommunikationskanal
i. eine Bestätigung, dass das zweite Computergerät die verschlüsselte Nachricht empfangen hat; und eine von dem zweiten Computergerät auf die Bestätigung angewandte Signatur; und/oder
ii. eine Bestätigung, dass das erste Computergerät die verschlüsselte Nachricht gesendet hat; und eine Signatur, die von dem ersten Computergerät auf die Bestätigung aufgebracht wird.

9. Verfahren (700) nach einem der Ansprüche 1 bis 8, umfassend:
eine Vielzahl von Vermögenswerten zu prägen (702), wobei die Vielzahl von Vermögenswerten den ersten und zweiten Vermögenswert umfasst;
Einsetzen (704) eines Smart Contracts, um Transaktionen auf der Blockchain durchzusetzen; Empfangen (706) einer Transaktionsanfrage, die mit einem ersten vorgeschlagenen Besitzer verbunden ist, um
festzuhalten, dass der erste vorgeschlagene Besitzer das Eigentum an einem aus der Vielzahl von Vermögenswerten ausgewählten Vermögenswert übernehmen soll;
Veranlassen (708) des Hinzufügens eines Transaktionsdatensatzes zu der Blockchain in Reaktion auf das Verifizieren, dass die Transaktionsanforderung den Smart Contract erfüllt, um den ersten vorgeschlagenen Besitzer mit dem ausgewählten Vermögenswert aus der Vielzahl von Vermögenswerten zu verknüpfen.

10. Vorrichtung (900) zum Ermöglichen von Kommunikationen in einem Computernetzwerk (100) zwischen einem ersten Computergerät (108a), das mit einem Besitzer (106a, 212a) eines ersten Vermögenswerts (210a) verbunden ist, und einem zweiten Computergerät (108b), das mit einem Besitzer (106b, 212b) eines zweiten Vermögenswerts (210b) verbunden ist, wobei:
ein erster Identifikator (204a) dem ersten Vermögenswert zugeordnet ist, wobei der erste Identifikator ein erstes nicht-fungibles Token, NFT, (202a) identifiziert, das den ersten Vermögenswert und den Besitzer des ersten Vermögenswerts repräsentiert;
einen zweiten Identifikator (204b), der mit dem zweiten Vermögenswert assoziiert wird, wobei der zweite Identifikator einen zweiten NFT (202b) identifiziert, der den zweiten Vermögenswert und den Besitzer des zweiten Vermögenswerts darstellt; und
die Vorrichtung zur Verwendung einer Blockchain (104, 200) konfiguriert ist, die über das Computernetzwerk zugänglich ist, wobei die Blockchain Folgendes anzeigt
eine Zuordnung (208a) zwischen dem ersten Identifikator und dem Besitzer des ersten Vermögenswerts; und
eine Zuordnung (208b) zwischen dem zweiten Identifikator und dem Besitzer des zweiten Vermögenswerts, und
wobei die Vorrichtung umfasst
eine Verarbeitungsschaltung (902), die mit einer Schnittstelle (904) kommunikativ gekoppelt ist, um mit dem Computernetzwerk zu kommunizieren; und
ein maschinenlesbares Medium (906) zum Speichern von Befehlen (908), die, wenn sie von der Verarbeitungsschaltung ausgeführt werden, die Verarbeitungsschaltung veranlassen
Bestimmen (302), ob ein Kommunikationskanal (430) zwischen dem ersten Computergerät und dem zweiten Computergerät eingerichtet werden kann, um die Kommunikation in dem Computernetzwerk zu erleichtern, indem die Blockchain verwendet wird, um zu überprüfen, ob das erste Computergerät dem Besitzer des ersten Vermögenswerts zugeordnet ist und das zweite Computergerät dem Besitzer des zweiten Vermögenswerts zugeordnet ist, wobei ein durch die Blockchain implementierter Smart Contract so konfiguriert ist, dass er durchsetzt, dass ein kryptografischer Schlüssel dem ersten und/oder dem zweiten Computergerät zur Verfügung gestellt wird, um den Kommunikationskanal einzurichten, wenn das erste und/oder das zweite Computergerät autorisiert sind, den kryptografischen Schlüssel zu empfangen; und als Reaktion auf die Überprüfung, dass das erste Computergerät dem Besitzer des ersten Vermögenswerts zugeordnet ist und das zweite Computergerät dem Besitzer des zweiten Vermögenswerts zugeordnet ist, veranlasst, dass die Einrichtung (304) des Kommunikationskanals zwischen dem ersten Computergerät und dem zweiten Computergerät erfolgt, um die Kommunikation zu erleichtern.

11. Ein computerimplementiertes Verfahren (1000) zum Ermöglichen von Kommunikationen in einem Computernetzwerk (100) zwischen einem ersten Computergerät (108a), das mit einem Besitzer (106a, 212a) eines ersten Vermögenswerts (210a) verbunden ist, und einem zweiten Computergerät (108b), das mit einem Besitzer (106b, 212b) eines zweiten Vermögenswerts (210b) verbunden ist, wobei:
das Verfahren (1000) durch das erste Computergerät implementiert wird;
ein erster Identifikator (204a) mit dem ersten Vermögenswert verbunden ist, wobei der erste Identifikator ein erstes nicht-fungibles Token, NFT, (202a) identifiziert, das für den ersten Vermögenswert und den Besitzer des ersten Vermögenswerts repräsentativ ist;
ein zweiter Identifikator (204b) mit dem zweiten Vermögenswert verbunden ist, wobei der zweite Identifikator ein zweites NFT (202b) identifiziert, das für den zweiten Vermögenswert und den Besitzer des zweiten Vermögenswerts steht; und
eine Blockchain (104, 200), die von einem Computerknoten des Computernetzwerks verwendet wird und auf die das Computernetzwerk zugreifen kann, Folgendes anzeigt
eine Zuordnung (208a) zwischen dem ersten Identifikator und dem Besitzer des ersten Vermögenswerts; und
eine Zuordnung (208b) zwischen dem zweiten Identifikator und dem Besitzer des zweiten Vermögenswerts; und
wobei das Verfahren (1000) umfasst
Empfangen (1002)
eine Anzeige, dass ein Kommunikationskanal (430) zwischen dem ersten Computergerät und dem zweiten Computergerät eingerichtet werden kann, basierend auf der Verifizierung unter Verwendung der Blockchain, dass das erste Computergerät mit dem Besitzer des ersten Vermögenswerts verbunden ist und dass das zweite Computergerät mit dem Besitzer des zweiten Vermögenswerts verbunden ist, wobei ein durch die Blockchain implementierter Smart Contract so konfiguriert ist, dass er durchsetzt, dass ein kryptografischer Schlüssel dem ersten und/oder zweiten Computergerät zum Einrichten des Kommunikationskanals zur Verfügung gestellt wird, wenn das erste und/oder zweite Computergerät zum Empfangen des kryptografischen Schlüssels berechtigt sind; und
Senden von Daten zum Senden an das zweite Computergerät;
Einrichten (1004) des Kommunikationskanals; und
gesichertes Übertragen (1006) der Daten zu dem zweiten Computergerät über den Kommunikationskanal.

12. Vorrichtung (1300) zum Ermöglichen einer Kommunikation in einem Computernetzwerk (100) zwischen einem ersten Computergerät (108a), das einem Besitzer (106a, 212a) eines ersten Vermögenswertes (210a) zugeordnet ist, und einem zweiten Computergerät (108b), das einem Besitzer (106b, 212b) eines zweiten Vermögenswertes (210b) zugeordnet ist, wobei:
die Vorrichtung (1300) durch das erste Computergerät implementiert wird;
ein erster Identifikator (204a) mit dem ersten Vermögenswert verbunden ist, wobei der erste Identifikator ein erstes nicht-fungibles Token, NFT, (202a) identifiziert, das den ersten Vermögenswert und den Besitzer des ersten Vermögenswerts repräsentiert;
einen zweiten Identifikator (204b), der dem zweiten Vermögenswert zugeordnet wird, wobei der zweite Identifikator eines zweiten NFT (202b) bezeichnet, der den zweiten Vermögenswert und den Besitzer des zweiten Vermögenswerts repräsentiert; und
ein Blockchain (104, 200), das von einem Computerknoten des Computernetzes verwendet wird und für das Computernetz zugänglich ist, zeigt an
eine Zuordnung (208a) zwischen dem ersten Identifikator und dem Besitzer des ersten Vermögenswerts; und
eine Zuordnung (208b) zwischen dem zweiten Identifikator und dem Besitzer des zweiten Vermögenswerts, und
wobei die Vorrichtung umfasst
eine Verarbeitungsschaltung (1302), die kommunikativ mit einer Schnittstelle (1304) zur Kommunikation mit dem Computernetzwerk gekoppelt ist; und
ein maschinenlesbares Medium (1306) zum Speichern von Befehlen (1308), die bei Ausführung durch die Verarbeitungsschaltung die Verarbeitungsschaltung veranlassen, Folgendes:
Empfangen (1002)
eine Anzeige, dass ein Kommunikationskanal (430) zwischen dem ersten Computergerät und dem zweiten Computergerät eingerichtet werden kann, basierend auf einer Verifizierung unter Verwendung der Blockchain, dass das erste Computergerät dem Besitzer des ersten Vermögenswerts zugeordnet ist und das zweite Computergerät dem Besitzer des zweiten Vermögenswerts zugeordnet ist, wobei ein durch die Blockchain implementierter Smart Contract konfiguriert ist, um zu erzwingen, dass ein kryptografischer Schlüssel dem ersten und/oder zweiten Computergerät zur Verfügung gestellt wird, um den Kommunikationskanal einzurichten, wenn das erste und/oder zweite Computergerät berechtigt sind, den kryptografischen Schlüssel zu empfangen; und
die Daten an das zweite Computergerät zu senden; den Kommunikationskanal einzurichten (1004); und
sicheres Senden (1006) der Daten über den Kommunikationskanal an das zweite Computergerät.

13. Ein computerimplementiertes Verfahren (1400) zum Ermöglichen von Kommunikationen in einem Computernetzwerk (100) zwischen einem ersten Computergerät (108a), das mit einem Besitzer (106a, 212a) eines ersten Vermögenswerts (210a) verbunden ist, und einem zweiten Computergerät (108b), das mit einem Besitzer (106b, 212b) eines zweiten Vermögenswerts (210b) verbunden ist, wobei:
das Verfahren (1400) durch das zweite Computergerät implementiert wird;
ein erster Identifikator (204a) mit dem ersten Vermögenswert verbunden ist, wobei der erste Identifikator ein erstes nicht-fungibles Token, NFT, (202a) identifiziert, das für den ersten Vermögenswert und den Besitzer des ersten Vermögenswerts steht;
ein zweiter Identifikator (204b) mit dem zweiten Vermögenswert verbunden ist, wobei der zweite Identifikator ein zweites NFT (202b) identifiziert, das für den zweiten Vermögenswert und den Besitzer des zweiten Vermögenswerts steht; und
eine Blockchain (104, 200), die von einem Computerknoten des Computernetzwerks verwendet wird und auf die das Computernetzwerk zugreifen kann, Folgendes anzeigt
eine Zuordnung (208a) zwischen dem ersten Identifikator und dem Besitzer des ersten Vermögenswerts; und
eine Zuordnung (208b) zwischen dem zweiten Identifikator und dem Besitzer des zweiten Vermögenswerts; und
wobei das Verfahren umfasst
Empfangen (1402) einer Anzeige, dass ein Kommunikationskanal (430) zwischen dem ersten Computergerät und dem zweiten Computergerät herstellbar ist, basierend auf einer Überprüfung unter Verwendung der Blockchain, dass das erste Computergerät dem Besitzer des ersten Vermögenswertes zugeordnet ist und dass das zweite Computergerät dem Besitzer des zweiten Vermögenswertes zugeordnet ist, wobei ein durch die Blockchain implementierter Smart Contract konfiguriert ist, um zu erzwingen, dass ein kryptografischer Schlüssel dem ersten und/oder zweiten Computergerät zur Verfügung gestellt wird, um den Kommunikationskanal einzurichten, wenn das erste und/oder zweite Computergerät autorisiert ist, den kryptografischen Schlüssel zu empfangen;
Einrichten (1404) des Kommunikationskanals; und
Daten, die sicher von dem ersten Computergerät über den Kommunikationskanal gesendet werden, zu empfangen (1406).

14. Nichtflüchtiges maschinenlesbares Medium (1600), das Anweisungen (1602) speichert, die, wenn sie von einer Verarbeitungsschaltung (1604) ausgeführt werden, die Verarbeitungsschaltung veranlassen, die Verfahren nach einem der Ansprüche 1 bis 9, 11 oder 13 zu implementieren.

15. Vorrichtung (1700) zum Ermöglichen einer Kommunikation in einem Computernetzwerk (100) zwischen einem ersten Computergerät (108a), das einem Besitzer (106a, 212a) eines ersten Vermögenswertes (210a) zugeordnet ist, und einem zweiten Computergerät (108b), das einem Besitzer (106b, 212b) eines zweiten Vermögenswertes (210b) zugeordnet ist, wobei:
die Vorrichtung (1700) durch das zweite Computergerät implementiert wird;
ein erster Identifikator (204a) mit dem ersten Vermögenswert verbunden ist, wobei der erste Identifikator ein erstes nicht-fungibles Token, NFT, (202a) identifiziert, das den ersten Vermögenswert und den Besitzer des ersten Vermögenswerts repräsentiert;
ein zweiter Identifikator (204b) mit dem zweiten Vermögenswert verbunden ist, wobei der zweite Identifikator ein zweites NFT (202b) identifiziert, das für den zweiten Vermögenswert und den Besitzer des zweiten Vermögenswerts steht; und
eine Blockchain (104, 200), die von einem Computerknoten des Computernetzwerks verwendet wird und auf die durch das Computernetzwerk zugegriffen werden kann, folgendes anzeigt
eine Verbindung (208a) zwischen dem ersten Identifikator und dem Besitzer des ersten Vermögenswerts; und
eine Zuordnung (208b) zwischen dem zweiten Identifikator und dem Besitzer des zweiten Vermögenswerts, und
wobei die Vorrichtung umfasst
eine Verarbeitungsschaltung (1702), die kommunikativ mit einer Schnittstelle (1704) zur Kommunikation mit dem Computernetzwerk verbunden ist; und
ein maschinenlesbares Medium (1706) zum Speichern von Befehlen (1708), die, wenn sie von der Verarbeitungsschaltung ausgeführt werden, die Verarbeitungsschaltung in die Lage versetzen
Empfangen (1402) einer Anzeige, dass ein Kommunikationskanal (430) zwischen dem ersten Computergerät und dem zweiten Computergerät eingerichtet werden kann, basierend auf der Verifizierung unter Verwendung der Blockchain, dass das erste Computergerät dem Besitzer des ersten Vermögenswerts zugeordnet ist und das zweite Computergerät dem Besitzer des zweiten Vermögenswerts zugeordnet ist, wobei ein durch die Blockchain implementierter Smart Contract so konfiguriert ist, dass er erzwingt, dass ein kryptografischer Schlüssel dem ersten und/oder zweiten Computergerät zum Einrichten des Kommunikationskanals zur Verfügung gestellt wird, wenn das erste und/oder zweite Computergerät zum Empfangen des kryptografischen Schlüssels autorisiert ist;
Einrichten (1404) des Kommunikationskanals; und
sicher von dem ersten Computergerät über den Kommunikationskanal gesendete Daten zu empfangen (1406).

## Revendications

1. Procédé mis en œuvre par ordinateur (300) dans un nœud informatique (118) destiné à faciliter les communications dans un réseau informatique (100) entre un premier dispositif informatique (108a) associé à un propriétaire (106a, 212a) d'un premier actif (210a) et un second dispositif informatique (108b) associé à un propriétaire (106b, 212b) d'un second actif (210b), dans lequel :
un premier identifiant (204a) est associé au premier actif, cet identifiant correspondant à un premier jeton non fongible (NFT) (202a) représentatif du premier actif et de son propriétaire ;
un second identifiant (204b) est associé au second actif, cet identifiant correspondant à un second NFT (202b) représentatif du second actif et de son propriétaire ; et
le nœud informatique est configuré dans le but d'utiliser une blockchain (104,200) accessible au réseau informatique, ladite blockchain indiquant :
une association (208a) entre le premier identifiant et le propriétaire du premier actif ; et
une association (208b) entre le second identifiant et le propriétaire du second actif, et
dans lequel le procédé consiste à :
déterminer (302) si un canal de communication (430) entre le premier dispositif informatique et le second dispositif informatique peut être établi pour faciliter les communications dans le réseau informatique, par le biais de la blockchain, afin de vérifier que le premier dispositif informatique est associé au propriétaire du premier actif et que le second dispositif informatique est associé au propriétaire du second actif, un contrat intelligent mis en œuvre par la blockchain étant configuré pour exiger qu'une clé cryptographique soit rendue disponible au premier et/ou au second dispositif informatique en vue d'établir le canal de communication si ces dispositifs sont autorisés à recevoir la clé cryptographique ; et
en réponse à la vérification selon laquelle le premier dispositif informatique est associé au propriétaire du premier actif et le second dispositif informatique est associé au propriétaire du second actif, déclencher (304) l'établissement du canal de communication entre le premier dispositif informatique et le second dispositif informatique afin de faciliter les communications.

2. Le procédé selon la revendication 1, dans lequel :
le premier NFT et le second NFT sont stockés dans la blockchain ;
l'association entre le premier identifiant et le propriétaire du premier actif est représentée par le premier NFT ; et l'association entre le second identifiant et le propriétaire du second actif est représentée par le second NFT ; et/ou
au moins l'un des premier et second dispositifs informatiques comprend un équipement utilisateur (User Equipment, UE) accessible au(x) propriétaire(s) respectif(s) du premier et du second actif.

3. Le procédé (500) selon l'une quelconque des revendications 1 ou 2, comprenant :
la réception (502) d'informations relatives à l'envoi d'un message chiffré via le canal de communication ; et
le déclenchement (504) de l'enregistrement d'un message dans un nœud informatique associé au réseau informatique, dans lequel l'enregistrement du message représente les informations relatives à l'envoi du message chiffré.

4. Le procédé selon la revendication 3, dans lequel les informations comprennent au moins l'un des éléments suivants :
i. les premier et second identifiants ; et
ii. une empreinte temporelle (timestamp) associée à l'heure d'envoi et/ou de réception du message chiffré ;
et/ou
dans lequel le nœud informatique est l'un des suivants :
i. un nœud d'un réseau pair-à-pair (P2P) associé au réseau informatique ;
ou
ii. un nœud du réseau informatique autorisé à enregistrer le message ;
et/ou
dans lequel déclencher l'enregistrement du message dans le nœud informatique entraîne l'ajout de ce message à la blockchain.

5. Le procédé selon l'une quelconque des revendications 3 ou 4, dans lequel le message chiffré comprend des données associées au propriétaire du premier actif, et dans lequel les données sont chiffrées à l'aide d'une clé cryptographique associée au second dispositif informatique.

6. Le procédé (600) selon la revendication 5, comprenant :
la réception (604) d'une demande, associée au propriétaire du premier actif, pour la clé cryptographique, cette demande indiquant au moins l'un des éléments suivants : le premier identifiant et/ou le second identifiant(s) ; et
la mise à disposition (606) de la clé cryptographique associée au second dispositif informatique pour le premier dispositif informatique.

7. Le procédé (600) selon la revendication 6, comprenant en outre, avant de rendre la clé cryptographique disponible pour le premier dispositif informatique, la vérification (602) de la validité de la demande en contrôlant l'identité du premier dispositif informatique ;
et/ou
dans lequel la clé cryptographique est rendue disponible par le biais de la blockchain pour au moins l'une des actions suivantes :
le stockage de la clé cryptographique ;
l'indication de l'emplacement où, dans le réseau informatique, la clé cryptographique peut être obtenue ;
la fourniture d'un accès à la clé cryptographique ; et/ou
la mise en œuvre d'une procédure d'établissement de liaison (handshake) entre le premier et le second dispositif informatique sur la base des informations relatives à l'établissement du canal de communication stockées dans la blockchain.

8. Le procédé selon l'une quelconque des revendications 3 à 7, dans lequel les informations reçues concernant l'envoi du message chiffré via le canal de communication comprennent :
i. une confirmation que le second dispositif informatique a reçu le message chiffré ; et une signature appliquée, par le second dispositif informatique, à cette confirmation ; et/ou
ii. une confirmation que le premier dispositif informatique a transmis le message chiffré ; et une signature appliquée, par le premier dispositif informatique, à cette confirmation.

9. Le procédé (700) selon l'une quelconque des revendications 1 à **8,** comprenant :
la création (702) d'une pluralité d'actifs, cette pluralité impliquant le premier et le second actifs ;
le déploiement (704) d'un contrat intelligent pour exécuter des transactions sur la blockchain ;
la réception (706) d'une demande de transaction associée à un premier propriétaire proposé afin d'enregistrer que ce propriétaire proposé doit devenir propriétaire d'un actif sélectionné parmi la pluralité d'actifs ;
en réponse à la vérification selon laquelle la demande de transaction satisfait aux conditions du contrat intelligent, déclencher (708) l'ajout d'un enregistrement de transaction à la blockchain pour associer le premier propriétaire proposé à l'actif sélectionné parmi la pluralité d'actifs.

10. Appareil (900) destiné à faciliter les communications dans un réseau informatique (100) entre un premier dispositif informatique (108a) associé à un propriétaire (106a, 212a) d'un premier actif (210a) et un second dispositif informatique (108b) associé à un propriétaire (106b, 212b) d'un second actif (210b), dans lequel :
un premier identifiant (204a) est associé au premier actif, cet identifiant correspondant à un premier jeton non fongible (NFT) (202a) représentatif du premier actif et de son propriétaire ;
un second identifiant (204b) est associé au second actif, cet identifiant correspondant à un second jeton non fongible (NFT) (202b) représentatif du second actif et de son propriétaire ; et
l'appareil est configuré pour utiliser une blockchain (104, 200) accessible au réseau informatique indiquant :
une association (208a) entre le premier identifiant et le propriétaire du premier actif ; et
une association (208b) entre le second identifiant et le propriétaire du second actif, dans lequel l'appareil comprend :
un circuit de traitement (902) couplé de manière communicative à une interface (904) pour communiquer avec le réseau informatique ; et
un support lisible par machine (906) stockant des instructions (908) qui, lorsqu'elles sont exécutées par le circuit de traitement, amènent le circuit de traitement à :
déterminer (302) si un canal de communication (430) entre le premier dispositif informatique et le second dispositif informatique peut être établi pour faciliter les communications dans le réseau informatique, par le biais de la blockchain, afin de vérifier que le premier dispositif informatique est associé au propriétaire du premier actif et que le second dispositif informatique est associé au propriétaire du second actif, un contrat intelligent mis en œuvre par la blockchain étant configuré pour exiger qu'une clé cryptographique soit rendue disponible au premier et/ou au second dispositif informatique afin d'établir le canal de communication si ces dispositifs sont autorisés à recevoir la clé cryptographique; et
en réponse à la vérification selon laquelle le premier dispositif informatique est associé au propriétaire du premier actif et le second dispositif informatique est associé au propriétaire du second actif, déclencher (304) l'établissement du canal de communication entre le premier dispositif informatique et le second dispositif informatique afin de faciliter les communications.

11. Procédé mis en œuvre par ordinateur (1000) destiné à faciliter les communications dans un réseau informatique (100) entre un premier dispositif informatique (108a) associé à un propriétaire (106a, 212a) d'un premier actif (210a) et un second dispositif informatique (108b) associé à un propriétaire (106b, 212b) d'un second actif (210b), dans lequel :
le procédé (1000) est mis en œuvre par le premier dispositif informatique ;
un premier identifiant (204a) est associé au premier actif, cet identifiant correspondant à un premier jeton non fongible (NFT) (202a) représentatif du premier actif et de son propriétaire ;
un second identifiant (204b) est associé au second actif, cet identifiant correspondant à un second NFT (202b) représentatif du second actif et de son propriétaire ; et
une blockchain (104, 200), utilisée par un nœud informatique du réseau informatique et accessible à celui-ci, indique :
une association (208a) entre le premier identifiant et le propriétaire du premier actif ; et
une association (208b) entre le second identifiant et le propriétaire du second actif, et dans lequel le procédé (1000) comprend :
la réception (1002) :
d'une indication qu'un canal de communication (430) peut être établi entre le premier dispositif informatique et le second dispositif informatique, basée sur la vérification, par le biais de la blockchain, que le premier dispositif informatique est associé au propriétaire du premier actif et que le second dispositif informatique est associé au propriétaire du second actif, un contrat intelligent mis en œuvre par la blockchain étant configuré pour exiger qu'une clé cryptographique soit rendue disponible au premier et/ou au second dispositif informatique afin d'établir le canal de communication si ces dispositifs sont autorisés à recevoir la clé cryptographique ; et
de données à transmettre au second dispositif informatique ;
l'établissement (1004) du canal de communication ; et
l'envoi (1006) sécurisé des données au second dispositif informatique via le canal de communication.

12. Appareil (1300) destiné à faciliter les communications dans un réseau informatique (100) entre un premier dispositif informatique (108a) associé à un propriétaire (106a, 212a) d'un premier actif (210a) et un second dispositif informatique (108b) associé à un propriétaire (106b, 212b) d'un second actif (210b), dans lequel :
l'appareil (1300) est mis en œuvre par le premier dispositif informatique ;
un premier identifiant (204a) est associé au premier actif, cet identifiant correspondant à un premier jeton non fongible (NFT) (202a) représentatif du premier actif et de son propriétaire ;
un second identifiant (204b) est associé au second actif, cet identifiant correspondant à un second NFT (202b) représentatif du second actif et de son propriétaire ; et
une blockchain (104, 200), utilisée par un nœud informatique du réseau informatique, accessible à celui-ci indique :
une association (208a) entre le premier identifiant et le propriétaire du premier actif ; et
une association (208b) entre le second identifiant et le propriétaire du second actif ; et
dans lequel l'appareil comprend :
un circuit de traitement (1302) couplé de manière communicative à une interface (1304) pour communiquer avec le réseau informatique ; et
un support lisible par machine (1306) stockant des instructions (1308) qui, lorsqu'elles sont exécutées par le circuit de traitement, amènent celui-ci à :
recevoir (1002) :
une indication qu'un canal de communication (430) peut être établi entre le premier dispositif informatique et le second dispositif informatique, basée sur la vérification, par le biais de la blockchain, que le premier dispositif informatique est associé au propriétaire du premier actif et que le second dispositif informatique est associé au propriétaire du second actif, un contrat intelligent mis en œuvre par la blockchain étant configuré pour exiger qu'une clé cryptographique soit rendue disponible au premier et/ou au second dispositif informatique afin d'établir le canal de communication si ces dispositifs sont autorisés à recevoir la clé cryptographique ; et
des données à transmettre au second dispositif informatique ;
établir (1004) le canal de communication ; et
envoyer (1006) les données de manière sécurisée au second dispositif informatique via le canal de communication

13. Procédé mis en œuvre par ordinateur (1400) destiné à faciliter les communications dans un réseau informatique (100) entre un premier dispositif informatique (108a) associé à un propriétaire (106a, 212a) d'un premier actif (210a) et un second dispositif informatique (108b) associé à un propriétaire (106b, 212b) d'un second actif (210b), dans lequel :
le procédé (1400) est mis en œuvre par le second dispositif informatique ;
un premier identifiant (204a) est associé au premier actif, cet identifiant correspondant à un premier jeton non fongible (NFT) (202a) représentatif du premier actif et de son propriétaire ;
un second identifiant (204b) est associé au second actif, cet identifiant correspondant à un second NFT (202b) représentatif du second actif et de son propriétaire ; et
une blockchain (104, 200), utilisée par un nœud informatique du réseau informatique, accessible à celui-ci indique :
une association (208a) entre le premier identifiant et le propriétaire du premier actif ; et
une association (208b) entre le second identifiant et le propriétaire du second actif, et
dans lequel le procédé comprend :
la réception (1402) d'une indication qu'un canal de communication (430) peut être établi entre le premier dispositif informatique et le second dispositif informatique, basée sur la vérification, par le biais de la blockchain, que le premier dispositif informatique est associé au propriétaire du premier actif et que le second dispositif informatique est associé au propriétaire du second actif, un contrat intelligent mis en œuvre par la blockchain étant configuré pour exiger qu'une clé cryptographique soit rendue disponible au premier et/ou au second dispositif informatique afin d'établir le canal de communication si ces dispositifs sont autorisés à recevoir la clé cryptographique ; et
l'établissement (1404) du canal de communication ; et
la réception (1406) de données envoyées de manière sécurisée par le premier dispositif informatique via le canal de communication.

14. Support non transitoire lisible par machine (1600) stockant des instructions (1602) qui, lorsqu'elles sont exécutées par le circuit de traitement (1604), amènent celui-ci à mettre en œuvre les procédés selon l'une quelconque des revendications 1 à 9, 11 ou 13.

15. Appareil (1700) destiné à faciliter les communications dans un réseau informatique (100) entre un premier dispositif informatique (108a) associé à un propriétaire (106a, 212a) d'un premier actif (210a) et un second dispositif informatique (108b) associé à un propriétaire (106b, 212b) d'un second actif (210b), dans lequel :
l'appareil (1700) est mis en œuvre par le second dispositif informatique ;
un premier identifiant (204a) est associé au premier actif, cet identifiant correspondant à un premier jeton non fongible (NFT) (202a) représentatif du premier actif et de son propriétaire ;
un second identifiant (204b) est associé au second actif, cet identifiant correspondant à un second NFT (202b) représentatif du second actif et de son propriétaire ; et
une blockchain (104, 200), utilisée par un nœud informatique du réseau informatique, accessible à celui-ci indique :
une association (208a) entre le premier identifiant et le propriétaire du premier actif ; et
une association (208b) entre le second identifiant et le propriétaire du second actif, et
dans lequel l'appareil comprend :
un circuit de traitement (1702) couplé de manière communicative à une interface (1704), permettant de communiquer avec le réseau informatique ; et
un support lisible par machine (1706) stockant des instructions (1708) qui, lorsqu'elles sont exécutées par le circuit de traitement, amènent celui-ci à :
recevoir (1002) une indication qu'un canal de communication (430) peut être établi entre le premier dispositif informatique et le second dispositif informatique, basée sur la vérification, par le biais de la blockchain, que le premier dispositif informatique est associé au propriétaire du premier actif et que le second dispositif informatique est associé au propriétaire du second actif, un contrat intelligent mis en œuvre par la blockchain étant configuré pour exiger qu'une clé cryptographique soit rendue disponible au premier et/ou au second dispositif informatique afin d'établir le canal de communication si ces dispositifs sont autorisés à recevoir la clé cryptographique ; et
établir (1404) le canal de communication ; et
recevoir (1406) des données envoyées de manière sécurisée par le premier dispositif informatique via le canal de communication.
